# EUROPEAN PATENT APPLICATION

(11) **EP 4 350 982 A1**
(43) Date of publication of application: **10.04.2024**
(21) Application number: 22200373.3
(22) Date of filing: 07.10.2022
(51) Int. Cl.: H02S 20/25, H02S 20/26, H02S 40/34, H02S 40/30

(54) **PHOTOVOLTAIC PANEL WITH INTEGRATED FUNCTIONAL COMPONENT FOR INSTALLATION ON A BUILDING AND METHOD OF MANUFACTURING A PHOTOVOLTAIC PANEL**

(71) Applicant: Sono Motors GmbH, 80935 München (DE)
(72) Inventor: HAHN, Laurin, 81373 München (DE)
(74) Representative: Qip Patentanwälte Dr. Kuehn & Partner mbB

(57) **Abstract**

The present invention relates to a photovoltaic, PV, panel (1) for an installation on a building and a method for producing the latter, the PV panel (1) including: a photovoltaic, PV, label (3) comprising a stack of at least a front side polymeric lamination foil (5), a rear side polymeric lamination foil (7) and a solar cell arrangement (9) including multiple solar cells (11) interposed between the front and rear side lamination foils (5, 7); an injection molded support structure (17) supporting the PV label (3), wherein the support structure (17) comprises a polymer covering a front surface (19) and at least partially a rear surface (21) of the PV label (3); wherein the PV panel (1) further comprises, at the rear surface (21) of the PV label (3), a connector box (61) for accommodating a connector for electrically connecting the PV label (3) and a wiring, wherein the connector box (61) comprises a housing (65), and wherein the housing (65) is integrally formed with the support structure (17) as one piece.

## Description

### FIELD OF THE INVENTION

The present invention relates to a photovoltaic panel for installation on a building and a method of manufacturing a photovoltaic panel for installation on a building.

### TECHNICAL BACKGROUND

A photovoltaic panel, sometimes referred to as "photovoltaics" or "PV" herein for short, may comprise only one solar cell, but may typically comprise a multiplicity of photovoltaic cells, wherein the or each photovoltaic cell is configured for converting incident or impinging light into electrical energy. One or more photovoltaic cells may be arranged in one or more photovoltaic panels or modules.

Such photovoltaics may be arranged on a building, for example, on the roof or on the facade of the building. More specifically, PV panels may be arranged on or within or form various parts of the building including roof, facade, etc. The term "building" may refer to panels which may be included in a building of any kind such as house, industrial plant, farm, parking lot roof, etc.

PV panels may, for example, cover at least portions of a roof or of a facade. Conventionally, most PV panels are generally prepared as separate components which are then installed on the building. For example, PV panels are installed on top of the roof of the building, wherein such roof is for example covered with conventional tiles in order to protect the building e.g. against weather influences such as rain, snow, storm, etc. Therein, a PV panel typically comprises a multitude of solar cells which are laminated between a front side glass sheet and a back sheet, all of the stack being supported by a frame. Each such PV panel typically has a substantial size of e.g. more than 0.5 m² and the solar cells comprised in such PV panel may provide a peak power of for example more than 100 Wp. Such conventional PV panels may be installed on the building using for example specific installation hooks for attaching the PV panel to a building's a carrier structure such as rafters of a roof construction. A plurality of PV panels may then be electrically interconnected to form a PV array and the PV array may then be connected to e.g. a converter. The converter may transform the electricity provided by the PV panels in order to supply this energy to the building or to a grid. Typically, the converter comprises an MCU (Microcontroller Unit) for implementing various functionalities such as an MPPT functionality (Maximum Power Point Tracking).

A connector is required to provide for electrical connection of the panel to an inverter and from there, to a wiring installation of the building. Connectors for connecting stationary PV panels, such as panel boxes, connection boxes or junction boxes may be arranged on an edge or a rear side of a panel. For example, a base plate or frame of the box may be glued with its entire footprint onto a rear side surface of the planar PV panel.

Connectors for use in a wiring installation of a building may have to meet specific requirements. For example, typical such requirements in a construction environment may include durability in view of temperature changes, humidity, time, etc. According to one approach, electrical components may be mechanically and electrically connected by screws. However, temperature changes and rain/frost may tend to nevertheless degrade and loosen the screws, so inspections may at least be required and the connector needs to be constructed to allow that, with according drawbacks regarding other requirements such as long-term protection against ingress of water, moisture, etc.

Moreover, PV panels which form roof tiles or building facades may usually be planar, but should also be available for buildings with curved facades. These PV labels should be cost-efficient and light weight so that they may be used for either in-roof or on-roof applications, and also for old buildings which have a lower stability with respect to additional weight.

### SUMMARY

Thus, an object of the present invention is to provide an improved and cost-efficient photovoltaic panel for installation on a building and corresponding method of manufacturing such a photovoltaic panel.

This object is solved by the subject-matter of the respective independent claims. Preferred embodiments of the invention are specified in the dependent claims.

Therefore, according to the invention, a photovoltaic panel for installation on a building is provided, the panel including: a photovoltaic, PV, label comprising a stack of at least a front side polymeric lamination foil, a rear side polymeric lamination foil and a solar cell arrangement including multiple solar cells interposed between the front and rear side lamination foils; an injection molded support structure supporting the PV label, wherein the support structure comprises a polymer covering a front surface and at least partially a rear surface of the PV label; wherein the PV panel further comprises, at the rear surface of the PV label, a connector box for accommodating a connector for electrically connecting the PV label and a wiring, wherein the connector box comprises a housing, and wherein the housing is integrally formed with the support structure as one piece.

By the inventive configuration, in particular, by using a polymer instead of heavy glass structures, the latter is very light weight, easy to install and cost-efficient. Further, by injection molding the connector housing to the PV label, further costs and manufacturing steps may be saved. Also, the inventive configuration provides for an overall robust structure that may be easily installed on any roof or facade of a building.

Additionally, according to an embodiment, the photovoltaic label may optionally comprise a front side polymeric stabilisation foil and/or a rear side polymeric stabilisation foil for providing the PV panel with an increased stability and rigidity.

According to a further embodiment, the support structure may further cover the rear surface of the photovoltaic label such as to tightly enclose the PV label, i.e. the PV label may be (integrally) embedded in the polymer of the support structure.

Further, the housing may comprise a polymer material, for example a thermoplastic material. For example, the thermoplastic material may be selected so as to be able to thermally fuse with any material of the PV panel, for example material of a PV label of the panel such as a thermoplastic or thermosetting polymer.

The conductor may be integrated within the housing. For example, the metal tab may be preassembled within the housing.

A PCB in the PV panel may further provide a contact point for the tab of the connector.

According to a preferred embodiment of the invention, the photovoltaic panel comprises a housing for a performance optimization device being provided on the rear surface of the PV label by injection molding, in particular, being integrally formed with the support structure. As the housing for the performance optimization device is pre-installed on the PV label, a corresponding device may be easily installed and, by being accommodated in the housing, is securely fixed to the PV panel.

According to a further preferred embodiment of the invention, cable rails or cable channels are provided on the rear surface of the PV panel by injection molding, in particular, being integrally formed with the support structure. Cables have to be guided along the panel for being connected, e.g., to a further adjacent panel or for being connected to the connector that, in turn, is connected to an inverter that transforms DC current generated by the solar cells of the PV panel into AC/DC current that may be used for electrical appliances in or of the building, or even for lighting or display devices integrated in the PV panels, or that may be used to be fed into a grid.

According to still a further embodiment of the invention, the support structure comprises a fixation arrangement, for example, including multiple protrusions or hooks, configured for being attached to a carrier structure provided at a surface of the building. The fixation arrangement may comprise an attachment structure, retainer protrusions and/or hooks configured for fixing the PV panel for example to the carrier structure including for example rafters on a roof of the building. The fixation arrangement may be provided at or protrude from a rear surface of the PV panel and/or a side edge of the PV panel. Particularly, the fixation arrangement may be formed by injection moulding and may therefore be formed as an integral portion of the support structure.

The support structure is configured such that support structures of neighbouring photovoltaic panels are attachable to the building's carrier structure such that the neighbouring photovoltaic panels overlap each other in a shingling manner.

According to still a further preferred embodiment of the invention, the attachment structure are realized by a plurality of protrusions or hooks provided on the rear surface of the PV panel, in particular on the support structure, by injection molding. This is also very cost efficient with respect to the production of the PV panel, because the hooks or protrusions or other fixation means may be produced, i.e., injection molded, in one step with the support structure, the connector housing and other components. For providing the hooks or protrusions, a material having some kind of reinforcement means may be used, e.g. a fiber reinforced plastic material.

Also, it is advantageous, if ventilation or cooling channels are provided on the rear surface of the PV panel by injection molding. As the solar cells provided in the PV panel are most efficient at a specific temperature range around 25 °C, the latter needs to be cooled to maintain efficiency. Thus, specifically with respect to in-roof-constructions of the PV panels, cooling means, e.g. cooling channels should be provided to dissipate the heat at higher temperatures. Providing cooling channels by means of injection molding in one step with providing the support structure, moreover, is very cost efficient.

For example, cooling hoses may be guided within the cooling channels carrying water. The heated water may be further used for hot water appliances within the building.

Preferably, the PV panel further comprises means for fastening or directing illuminating devices, for example, LEDs embedded integrally into the support structure PV panel or LED strips, or means for accommodating display devices on the rear or front surface of the PV panel by injection molding.

For example, light emitters such as LEDs enable for example illuminating portions of the PV panel for giving them an intended colour or even generating light effects which may be used for example for advertising purposes. Alternatively or additionally, sensors may be integrally embedded in the PV panel, allowing for example integrated temperature measurement capabilities, mechanical strain supervision in the PV panels, etc.

This is very advantageous with respect to decorations or advertising on the building. For example, as there are provided, in a very cost efficient manner, means for fastening or directing illuminating devices, e.g. LED strips or other illuminating means may be integrated into the PV panel and may even be customized according to the desired appearance. Thus, for example, Christmas lighting may be pre-installed in the PV panels and may be turned on or off, as desired. Also, advertisements may be integrated into the PV panels by providing corresponding illumination means. Further, also other building related appliances may be integrated into the PV panels, e.g. house numbers or addresses or names may be integrated into e.g. facade PV panels.

Also, the PV panels may be configured to comprise an entire display, e.g. replacing a certain number of solar cells. This may compromise efficiency and the output of that PV panel, but enables easy and variable display of any kind of content on the building.

Moreover, according to still another preferred embodiment of the invention, the support structure is made by injection molding the moldable polymer together with the photovoltaic label.

Further, the support structure may preferably be provided with a non-flat surface geometry, in particular, with a texture providing a roofing shingle-like appearance, wherein the surface comprises a shape imitating multiple tiles. By providing the shingle-like structure on the upper surface of the PV panel, a realistic shingle roof is achieved. This may further be enhanced when providing colored PV panels.

Alternatively, the support structure may be provided with a non-flat surface geometry, in particular, with a texture providing a facade cladding-like appearance. This provides for a very appealing look of the entire building and further provides an improved solar energy yield for the building compared to only providing the roof with PV panels.

Moreover, according to yet another preferred embodiment of the invention, the PV panel has an overall planar structure.

Alternatively, the PV panel according to another preferred embodiment comprises an overall curved structure. This is specifically advantageous for curved or round buildings. The curved structure may be achieved by the materials and the manufacturing method used in a very cost efficient manner. Virtually, any shape may be achieved by the materials used for the PV panel.

According to another preferred embodiment of the invention, the overall curved structure is a structure that is two- or three dimensionally curved.

Preferably, the support layer covers the front surface of the PV label with a polymer layer having a thickness of at least 2 mm.

According to still another preferred embodiment of the invention, the multiple solar cells of the solar cell arrangement are electrically interconnected and the solar cell arrangement is electrically connected to the electric contacts of the connector.

Moreover, according to the present invention, a method of manufacturing a PV panel, in particular a PV panel with the features as defined above, is provided, wherein the method comprises the steps of providing a PV label with the features as defined above, for installation on a building, providing a support structure supporting the PV label by injection molding, wherein the support structure comprises a polymer covering at least a front surface of the PV label; and providing by injection molding onto the rear surface of the PV label, at least one of a connector box, a housing for a performance optimization device, a cable rail or cable channel, a plurality of fastening hooks, ventilation or cooling channels, and/or means for fastening or directing illuminating devices, in particular, LED strips.

It is to be noted that the present application has been formulated with a focus on the PV panel including a functional component being a connector. However, those skilled in the art understand that the general idea of providing the PV panel with a functional component having portions thereof consisting of a moldable polymer, such portions being formed as an integral part of the support structure of the PV panel using injection molding techniques for preparing the support structure together with the housing, may be transferred to other functional components such as a housing for a performance optimization device, a cable rail or cable channel, a fixation arrangement, at ventilation or cooling channels and/or means for fastening or directing illuminating devices. Accordingly, in a generalized approach (which is not necessarily covered in its entirety by the claims of the present application but which could potentially be claimed in subsequent applications or divisional applications), the PV panel may comprise, additionally to or instead of the connector box, any other functional component having portions thereof made of polymer material and being integrally formed with the support structure as one piece.

### BRIEF DESCRIPTION OF THE DRAWINGS

In the following, advantageous embodiments of the invention will be described with reference to the enclosed drawings. However, neither the drawings nor the description shall be interpreted as limiting the invention.
Fig. 1 shows a cross-section of a PV panel in accordance with an embodiment of the present invention.
Fig. 2 shows a top view onto a PV panel in accordance with an embodiment of the present invention.
Fig. 3 shows a perspective view of a connector box according to an embodiment of the present invention.

The figures are only schematic and not to scale. Same reference signs refer to same or similar features.

### DESCRIPTION OF PREFERRED EMBODIMENTS

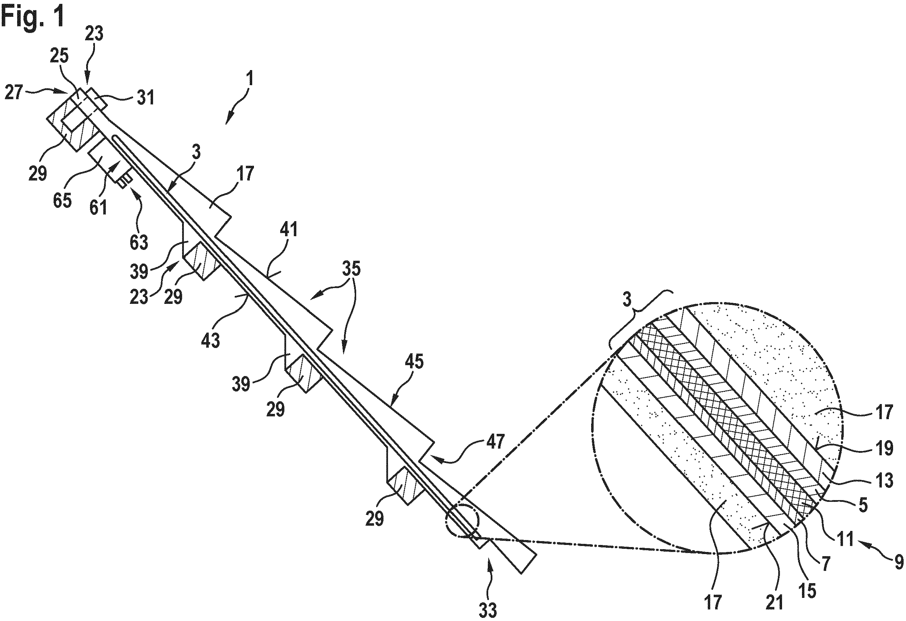

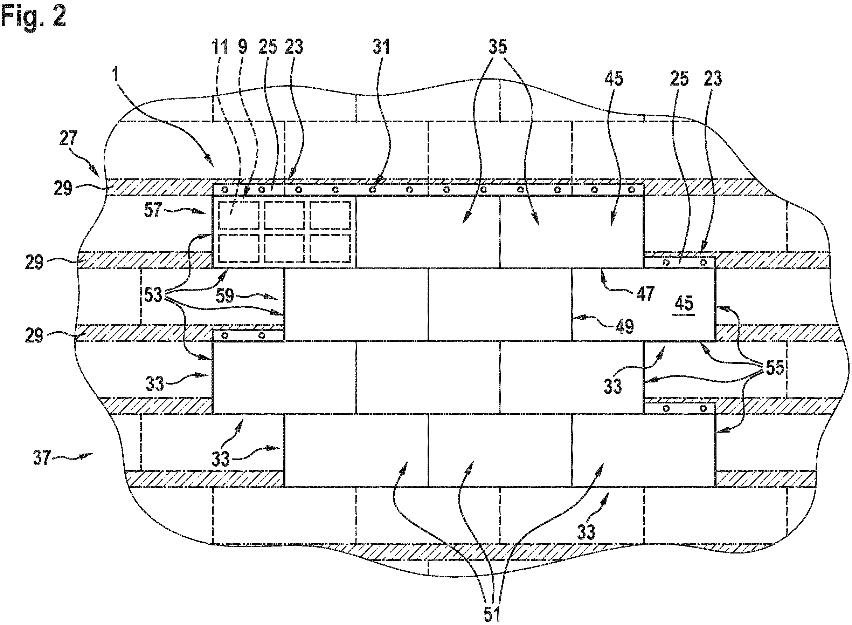

Fig. 1 shows a cross-sectional view of a PV panel 1 installed on a carrier structure 27 of a building. Fig. 2 shows a top view onto the PV panel 1 being part of an entire PV array 37.

The PV panel 1 comprises a PV label 3 embedded in a support structure 17. The PV label 3 comprises a solar cell arrangement 9 including multiple solar cells 11 which are interposed between a front side polymeric lamination foil 5 and a rear side polymeric lamination foil 7 forming an encapsulation for the solar cell arrangement 9. Preferably, the solar cells 11 are a high efficiency wafer-based silicon solar cells. Even more preferably, the solar cells 11 are back contact solar cells, such as IBC solar cells, having all their electrical contacts on a rear side of a solar cell substrate. Furthermore, the solar cell arrangement 9 comprises electrical interconnectors (not shown) for electrically interconnecting the solar cells 11 in series and/or in parallel. In a beneficial implementation in which the solar cells 11 are back contact solar cells, such electrical connectors may be implemented e.g. using a patterned metal structure deposited on a foil, wherein such foil may be the rear side polymeric lamination foil 7 or an additional foil to be combined or laminated together with the lamination foils 5, 7. The solar cell arrangement 9 may comprise further components such as bypass diodes, etc. (not shown).

In the example shown, the PV label 3 further comprises a front side polymeric stabilisation foil 13 and a rear side polymeric stabilisation foil 15. Such stabilisation foils 13, 15 are generally thicker than the lamination foils 5, 7 and/or consist of a polymer material having a larger mechanical strength than the material of the lamination foils 5, 7. Accordingly, such stabilisation foils 13, 15 may increase a mechanical rigidity and/or load-bearing capacity of the PV label 3, such as to prevent for example the solar cells 11 from being excessively bent or mechanically locally loaded e.g. during a manufacturing procedure.

In order to mechanically stabilise the PV label 3 and, particularly, protect the PV label 3 against environmental influences such as rain, wind, hail, etc., the PV panel 1 comprises a support structure 17. The support structure 17 mainly or completely consists of a mouldable polymer. Optionally, a combination of two or more polymers may be comprised in the support structure 17 and/or the polymer material may be reinforced using fibres such as glass fibres, carbon fibres, etc. The polymer may have a high transparency such that e.g. more than 90%, preferably more than 95% or 98% of incident light is transmitted through a layer of the polymer with a thickness of 5 mm. The support structure 17 covers at least a front surface 19 of the PV label 3. Preferably and as shown in the example of Fig. 1, the support structure 17 also covers a rear surface 21 of the PV label 3, thereby embedding the entire PV label 3 in the polymer forming the support structure 17.

Such support structure 17 may be made by injection moulding techniques. Particularly, the prefabricated PV label 3 may be included in a mould having an intended shape of the PV panel 1 and mouldable polymer may then be injected into the mould for forming the support structure 17. Due to the use of such injection moulding technique, the PV panel 1 with its support structure 17 may be formed into complex, non-planar geometries.

The support structure 17 may be made such that a portion of the support structure 17 covering the front surface 19 of the PV label 3 forms a layer having a sufficient thickness for providing weather resistance, particularly rain and hail resistance, to the underlying PV label 3. For example, such polymer layer of the support structure 17 may be thicker than 2 mm, preferably thicker than 5 mm. Due to such thick polymeric support structure 17 on top of its front surface 19, the PV label 3 and particularly its solar cells 11 are well protected against weather influences. Accordingly, the provision of a glass front sheet as conventionally used in PV panels is generally dispensable, thereby reducing e.g. costs, manufacturing energy consumption and/or weight of the PV panel 1. In other words, the polymeric support structure 17 may form an outermost and exposed front surface of the PV panel 1.

The support structure 17 further comprises a fixation arrangement 23. Such fixation arrangement 23 includes multiple attachment structures 25 which are configured such that the PV panel 1 with its support structure 17 may be attached to a carrier structure 27 provided at a surface of a building. For example, such carrier structure 27 may comprise multiple rafters 29 fixed to roof beams (not shown) at the building's roof. In the simple implementation shown in the figures, the attachment structures 25 are formed by a lateral extension of the support structure 17, the lateral extension including through-holes through which fixation elements 31 such as screws may extend. Additionally, the fixation arrangement 23 may further comprise retainer protrusions 39 protruding for example at a rear side of the PV panel 1, such retainer protrusions 39 serving for example for retaining the PV panel 1 at other rafters 29. It is to be noted that those skilled in the art know that various other types of attachment structures 25 may be used for implementing a fixation arrangement 23 for the PV panel 1.

Preferably, the attachment structures 25 and/or the hooks or retainer protrusions 39 may be made with a mouldable polymer. For example, the attachment structures 25 and/or the retainer protrusions 39 may be made with the same polymer as used for other portions of the support structure 17. Accordingly, the attachment structures 25 may preferably be made in a same injection moulding process as used for forming the support structure 17 and may therefore integrally protrude from other portions of the support structure 17.

The PV panel 1 with its support structure 17 and its fixation arrangement 23 is specifically configured such that the support structures 17 of neighbouring PV panels 1 may be attached to the building's carrier structure 27 in a manner such as to partially overlap each other in a shingling manner. For such purpose, the support structure 17 of the PV panel 1 may be prepared with a geometry such that, on the one hand, portions of the support structure 17 forming the fixation arrangement 23 are arranged and configured such that the support structure 17 may be attached to the building's a carrier structure 27, while, on the other hand, other portions of the support structure 17 are configured such as to overlap portions of a neighbouring PV panel 1. For example, the latter mentioned other portions may be formed by a sealing structure 33. The sealing structure 33 may be configured, for example, as an undercut or other structure in which opposing edges from two adjacent PV panels 1 are sealingly engaging each other and which may be arranged at one or plural lateral edges of the PV panel 1, particularly at edges of the PV panel 1 being directed downwardly upon the PV panel 1 being installed on the building. The sealing structure 33 comprising an undercut may be configured such as to locally overlap portions of the support structure 17 of a neighbouring PV panel 1, the undercut structure 33 and the overlapped portions preferably having complementary geometries, similar to for example a tongue and groove configuration.

As visualised in Fig. 1, the support structure 17 is provided with a non-flat or structured surface geometry. Particularly, a front surface 41 of the PV panel 1 is provided with a step geometry. In such step geometry, a sloped front surface portion 45 is arranged at an acute angle of between 2° and 20° relative to a rear surface 43 of the PV panel 1. The PV panel 1 comprises multiple such sloped front surface portions 45 arranged in horizontal rows. Therein, neighbouring sloped front surface portions 45 are connected to each other via a flank front surface portion 47. Such flank front surface portion 47 extends almost orthogonal, i.e., for example with an angle in a range of between 70° and 110°, relative to the rear surface 43 of the support structure 17. Accordingly, each sloped front surface portion 45 is delimited with regards to a sloped front surface portion 45 neighbouring in a vertical direction by an intermediate flank front surface portion 47.

Furthermore, as visualised in Fig. 2, sloped front surface portions 45 neighbouring each other in a horizontal direction are delimited from each other by a vertical groove 49.

With such non-flat surface geometry, the support structure 17 may imitate multiple virtual tiles 35. Therein, each sloped front surface portion 45 and its associated flank front surface portion 47 and groove 49 may be interpreted as a unit cell 51 representing one virtual tile 35. Each virtual tile 35 has a size similar to conventional tiles. Therein, the virtual tile 35 comprises multiple solar cells 11 in the PV label 3 included in its unit cell 51 (wherein it is to be noted that, for simplified visualisation, solar cells 11 are only shown in the uppermost left virtual tile 35 in Fig. 2).

In the example shown in the figures, each unit cell 51 has a planar surface and a rectangular contour. However, it is to be noted that using for example the injection moulding technique for preparing the support structure 17, each unit cell may have a curved surface and/or a curved contour. Therein, the curved surface may comprise macroscopic curved portions, thereby influencing for example its visual appearance and/or its water draining characteristics. Additionally or alternatively, the curved surface may comprise microscopic curved portions, e.g. for generating dirt repellent characteristics (Lotus effect). Furthermore, the unit cells 51 may have a rounded contour, e.g. for imitating conventional rounded shingles.

Furthermore, in order to imitate the visual appearance of a conventional shingled roof, vertically neighbouring unit cells 51 extend along planes being spaced from each other by a tiling distance. In other words, the sloped front surface portions 45 of virtual tiles 35 in different rows of tiles extend in parallel planes, wherein a distance between such planes corresponds to the tiling distance and is substantially defined by a width of the flank front surface portion 47 extending between the neighbouring sloped front surface portions 45.

As visualised in Fig. 2, the PV panel 1 has a non-rectangular contour. Particularly, a first side edge 53 of the panel 1 comprises laterally protruding portions 57 and the laterally recessed portions 59. Such protruding and recessed portions 57, 59 may have sizes resulting from dimensions of the unit cells 51 forming the virtual tiles 35 and/or from a pitch distance in a horizontal and/or vertical direction between neighbouring unit cells 51. A second side edge 55 opposing the first side edge 53 of the panel 1 comprises a non-linear contour being complementary to the contour at the first side edge 53. Due to such complementary contours, neighbouring PV panels 1 may be arranged such as to laterally engage with each other in a nested manner, thereby improving a mechanical interconnection between the neighbouring PV panels 1 and increasing an overall stability of the entire PV array 37. Furthermore, for example a lower edge portion at each of the laterally protruding portions 57 may be provided with an undercut structure 33 such as to locally overlap an upper edge portion of a laterally protruding portion 57 of a neighbouring PV panel 1.

As visualised in Fig. 2, the PV panel 1 may have a substantial size of more than 0.5 m² and includes a multiplicity of solar cells 11 (72 solar cells in the represented example), such as to provide the solar cell arrangement 9 with a peak power capacity of typically more than 200 Wp. Accordingly, the PV panel 1 has similar dimensions and a similar peak power capacity as conventional PV panels. This enables the proposed PV panels 1 to be operated using for example conventional converters, conventional MPPT, etc. Furthermore, the large-sized PV panels 1 may be rapidly installed at a building, as each PV panel 1 covers a substantial area and therefore only a relatively small number of PV panels 1 is to be installed (in contrast to a case where for example a roof is to be covered with a large multiplicity of small PV tiles).

Furthermore, providing the PV panel 1 with a large size and large peak power capacity may help reducing wiring efforts for electrically interconnecting the PV panels 1 in the PV array 37. For such purpose, each PV panel 1 comprises one or more connection boxes 61. The connection box 61 includes electric contacts 63 accessible from outside the PV panel 1. The solar cells 11 in the solar cell arrangement 9 are electrically interconnected and connected to the electric contacts 63, thereby enabling electrically interconnecting neighbouring PV panels 1 and electrically connecting the entire PV array 37 to a converter or an electricity consumer. The connection box 61 comprises a housing 65 accommodating the electric contacts 63. Such housing 65 may be made with a mouldable polymer. Accordingly, the housing 65 may be integrally formed together with other portions of the support structure 17.

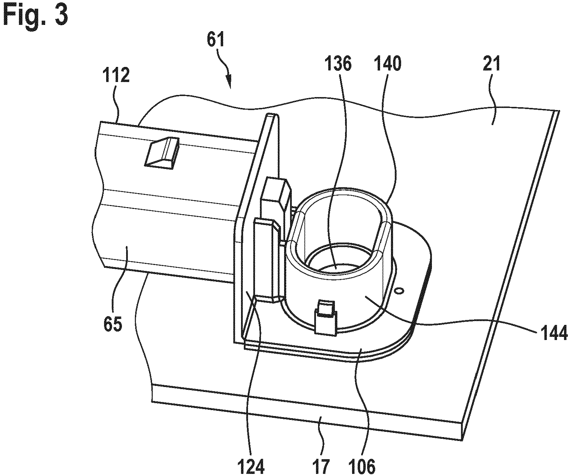

Fig. 3 shows a perspective view of a connector box 61 according to an embodiment of the invention. As mentioned above, the PV panel may further comprise one or more connector boxes 61 for electrically connecting the solar cell arrangement 9 to electric contacts of the one or more connector boxes 61. As also explained above, the multiplicity of solar cells 11 comprised in the PV panel 1 may all be interconnected with each other for generating one or a few PV strings of solar cells 11 being electrically connected in series and/or in parallel and the entire solar cell arrangement 9 prepared thereby may be electrically connected to the electric contacts in a single connection box 61 (or alternatively to electric contacts in a few connection boxes such as two or three connection boxes per PV panel).

The connector box 61 comprises a housing 65 which comprises a contact part 106 which is configured for contacting a contact area at the PV panel 1, as discussed in detail further below. The housing 65 further comprises a connection part 112 configured for connecting to a connector (not shown) of a wiring of a building.

The housing 65 which comprises or mainly or completely consists of a mouldable polymer and is formed integrally with portions of the support structure 17. Expressed differently, the connector box 61 of the PV panel 1 is formed as an integral portion or component together with the support structure 17. Therein, both the support structure 17 and the connector box 61 may be made from a polymer, i.e. from a same polymer or from compatible polymers. Preferably, the support structure 17 and the connector box 61 may be prepared in a common manufacturing step. For example, both parts may be prepared in a same mould using injection moulding techniques. As a result, various benefits such as reduced production costs, increased reliability, simplified interconnection, etc. may be achieved.

The contact part 106 and connection part 112 are arranged at an angle of approximately 90°.

The connection between connection part 112 and a connector (not shown) may be a pluggable connection.

Further, as can be seen in Fig. 3, the contact part 106 and the connection part 112 are laterally offset from each other, wherein the connection part 112 can be understood as being laterally joined to contact part 106 by a joining portion 124 of connector box 61.

It is noted in this respect that for ease of understanding the PV panel 1 is flat, while in general the or any PV panel 1 may also be curved, for example, for being attached to curved facades of buildings, and therefore the requirement that the connection part 112 being spaced apart from the PV panel needs to take into account the curvatures of the PV body panels which are to be equipped with the connector. Therefore, a connector box 61 may be designed to be applicable for a plurality of curved surface panels.

Further, the contact part 106 may comprise a socket. However, the socket may also be omitted.

A through-hole 140 may comprise a protection cap or cover (not shown) for closing the though-hole 140 of the contact part 106 after an electrical connection has been established to the PV panel 1. The contact part 106 comprises a protrusion 144 over which to put the protection cap (not shown), to thereby close the through-hole 140 such that one or more of the functions of protecting / sealing a contact point 136 and/or tab from humidity, water, dust, corrosion, abrasion, any other kind of aging, etc. is achieved. According to embodiments, protrusion 144 may comprise a hollow shaft, stub, collar, fragments thereof, etc.

The protection cap can be of any material, preferably polymer. The protection cap can be configured removable, which allows servicing of a contact point 136.

It is to be noted that the applicant disclosed a connector for electrically connecting a PV panel in an earlier patent application (application number: EP 22 189 888). Furthermore, the applicant disclosed a method for producing a PV panel with a connector attached by overmolding in an earlier patent application (application number: EP 22 189 890). Details disclosed in these earlier applications may be applied or adopted in a similar manner to the approaches described in the present application. The content of the earlier applications is incorporated herein by reference in their entirety.

Summarising, the PV panel 1 proposed herein differs from conventional PV panels and from conventional PV tiles in that its solar cells 11 are comprised in a PV label 3 and the PV label 3 is mechanically stabilised by a support structure 17, wherein the support structure 17 generally does not comprise any glass front sheet but covers the front surface of the PV label 3 with a thick layer of polymer. Particularly, the support structure 17 is preferably moulded onto the PV label 3 by injection moulding techniques. Therein, the PV panel 1 has similar dimensions and peak power capacity as conventional PV panels and therefore differs from small sized conventional PV tiles. However, in contrast to conventional PV panels, the PV panel 1 proposed herein is specifically adapted for being directly attached to a building's carrier structure 27. F, wherein neighbouring PV panels 1 are configured for laterally overlapping each other in a shingling manner. The proposed PV panel 1 may provide for various advantages in comparison to conventional building-applied PV using conventional PV panels or using conventional PV tiles such as:
- lower number of connection boxes required as compared to one connection box for each of a large multiplicity of conventional PV tiles;
- lower productions costs by providing the attachment structure, the connection box housing, cable channels, cooling channels, etc. by injection moulding in one production step in which also the support structure is formed;
- lower production costs by embedding sensors, illumination devices, cooling devices, or other devices into the support structure during the injection moulding production step;
- simplified cabling, as a small number of PV panels needs to be interconnected; less efforts and less costs for cables;
- reduced costs, as no separate conventional tiles and additional PV panels are to be provided or, alternatively, as no multiplicity of conventional PV tiles is to be provided and electrically interconnected;
- standard converters and MPPT may be used;
- good longevity as e.g. the polymeric support structure does generally not break in case of a hailstorm (enabling less replacement costs, better insurance, etc.);
- no disturbing direct reflection from sun light as instead of glass, non-reflecting polymer materials and/or a polymer-based support structure having a reflection-reducing texture at its front side are used;
- improved aesthetics due to integration of the PV directly into the roof (no separate PV panels) and possible adaption of the visual appearance of the PV panel to imitate conventional tiles;
- improved sustainability as polymer-based support structure of the PV panel may be produced with less energy (compared to conventional PV panels comprising glass cover sheets) and may possibly be recycled (using, inter-alia, the different melting temperatures of the materials comprised in the PV panel with the polymer having a substantially lower melting point than e.g. metals forming the electric contacts and silicon forming the solar cells);

As an additional remark, it shall be noted that, using the applicant's novel injection moulding manufacturing technique, additional beneficial features may be implemented for the PV panel. For example, additional components or devices may be included in the PV panel and may for example be embedded in the polymer forming the support structure.

Furthermore, the PV panels may be provided with different colours. While the solar cells should generally be as dark as possible (e.g. black or dark blue) in order to optimise their efficiency, solar cells may also be provided with other colours (e.g. red, blue, green, etc.) in cases where a visual appearance of the PV panel shall be modified. For example, PV panels imitating conventional red-coloured tiles may be prepared using solar cells having a reddish front surface due to e.g. their antireflection coating being specifically adopted for reflecting red spectrum portions. Optionally, a colour of the PV panel at gaps between neighbouring solar cells may be adapted to the colour of the solar cell, e.g. by using coloured rear surface polymeric foils in the PV label, thereby providing the PV panel with a homogeneous colour appearance.

Finally, it should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### Reference numerals

- 1: PV panel
- 3: PV label
- 5: lamination foil
- 7: lamination foil
- 9: solar cell
- 11: solar cell arrangement
- 13: stabilisation foil
- 15: stabilisation foil
- 17: support structure
- 19: front surface
- 21: rear surface
- 23: fixation arrangement
- 25: attachment structure
- 27: carrier structure
- 29: rafters
- 31: fixation elements
- 39: retainer protrusion
- 43: rear surface
- 45: sloped front portion
- 47: front surface portion
- 51: unit cell
- 55: second side edge
- 57, 59: protruding and recessed portions
- 61: connector box
- 63: electric contacts
- 65: housing
- 106: contact part
- 124: joining portion
- 136: contact point
- 140: through hole
- 144: protrusion

## Claims

1. Photovoltaic, PV, panel (1) for an installation on a building, the PV panel (1) including:
a photovoltaic, PV, label (3) comprising a stack of at least a front side polymeric lamination foil (5), a rear side polymeric lamination foil (7) and a solar cell arrangement (9) including multiple solar cells (11) interposed between the front and rear side lamination foils (5, 7);
an injection molded support structure (17) supporting the PV label (3), wherein the support structure (17) comprises a polymer covering a front surface (19) and at least partially a rear surface (21) of the PV label (3);
wherein the PV panel (1) further comprises, at the rear surface (21) of the PV label (3), a connector box (61) for accommodating a connector for electrically connecting the PV label (3) and a wiring, wherein the connector box (61) comprises a housing (65), and
wherein the housing (65) is integrally formed with the support structure (17) as one piece.

2. Photovoltaic panel (1) according to claim 1, wherein a housing for accommodating a performance optimization device is provided on the rear surface (21) of the PV label (3) by injection molding, in particular, integrally with the support structure (17).

3. Photovoltaic panel (1) according to claim 1 or claim 2, wherein cable rails or cable channels are provided on the rear surface (21) of the PV label (3) by injection molding, in particular, integrally with the support structure (17).

4. Photovoltaic panel (1) according to any one of the preceding claims, wherein a fixation arrangement (23) is provided on the rear surface (21) of the PV label (3) by injection molding, in particular, integrally with the support structure (17).

5. Photovoltaic panel (1) according to any one of the preceding claims, wherein ventilation or cooling channels are provided on the rear surface (21) of the PV panel (3) by injection molding.

6. Photovoltaic panel (1) according to any one of the preceding claims, wherein the PV panel (1) further comprises means for fastening or directing illuminating devices, in particular, LED strips or for accommodating display devices on the rear or front surface of the PV panel by injection molding, in particular, integrally with the support structure (17).

7. Photovoltaic panel (1) according to any one of the preceding claims, wherein the support structure (17) is made by injection molding the moldable polymer together with the photovoltaic label (3).

8. Photovoltaic panel (1) according to one of the preceding claims, wherein the support structure (17) is provided with a non-flat surface geometry, in particular, with a texture providing a roofing shingle-like appearance, wherein the surface comprises a shape imitating multiple tiles.

9. Photovoltaic panel (1) according to any one of claims 1 to 7, wherein the support structure (17) is provided with a non-flat surface geometry, in particular, with a texture providing a facade cladding-like appearance.

10. Photovoltaic panel (1) according to any one of the preceding claims, wherein the PV panel (1) has an overall planar structure.

11. Photovoltaic panel (1) according to any one of claims 1 to 9, wherein the PV panel (1) further comprises an overall curved structure.

12. Photovoltaic panel (1) according to claim 11, wherein the overall curved structure is a structure that is two- or three dimensionally curved.

13. Photovoltaic panel (1) according to any one of the preceding claims,
wherein the support structure (17) covers the front surface (19) of the PV label (3) with a polymer layer having a thickness of at least 2 mm.

14. Photovoltaic panel (1) according to any one of the preceding claims, wherein the multiple solar cells (9) of the solar cell arrangement (11) are electrically interconnected and the solar cell arrangement (11) is electrically connected to the electric contacts of the connector.

15. Method of manufacturing a PV panel (1), in particular the PV panel (1) according to any of the preceding claims, the method comprises the steps of
providing a PV label (3) having the features according to any one of the preceding claims,
providing a support structure (17) supporting the PV label (3) by injection molding, wherein the support structure (17) comprises a polymer covering at least a front surface (19) of the PV label (3); and
providing, by injection molding on the rear surface (21) of the PV label (3), at least one of a connector box (61), a housing for a performance optimization device, a cable rail or cable channel, a fixation arrangement (23), ventilation or cooling channels, and/or means for fastening or directing illuminating devices, in particular, LED strips.
